# EUROPÄISCHE PATENTSCHRIFT

(11) **EP 0 824 285 B1**
(45) Veröffentlichungstag und Bekanntmachung des Hinweises auf die Patenterteilung: **29.03.2000**
(21) Anmeldenummer: 97110614.1
(22) Anmeldetag: 28.06.1997
(51) Int. Cl.: H02G 5/10, H01B 7/42

(54) **Verfahren zum Betreiben einer Kabelanlage**
Method for operating a cable installation
Procédé de commande une installation de câbles

(30) Priorität: 14.08.1996 DE 19632765; 28.02.1997 DE 19710445
(43) Veröffentlichungstag der Anmeldung: 18.02.1998
(73) Patentinhaber: Felten & Guilleaume AG, 51063 Köln (DE)
(72) Erfinder: Brakelmann, Heinrich, Prof. Dr.-Ing., 47495 Rheinberg (DE)

(56) Entgegenhaltungen:
- DE-A- 2 327 316
- DE-A- 3 627 149
- FR-A- 1 411 218
- FR-A- 1 447 762

## Beschreibung

Die Erfindung betrifft ein Verfahren zum Betreiben eine Kabelanlage zur Übertragung großer Leistungen durch Hochspannungskabel mit einer Kühleinrichtung nach dem Oberbegriff des 1. Patentanspruchs und eine entsprechende Kabelanlage nach dem Oberbegriff des 7. Patentanspruchs, (vgl. FR 1 411 218).

Das Prinzip solcher gekühlter Kabelanlagen wird allgemein mit hydraulischer Kaskadenschaltung bezeichnet und ist beispielsweise beschrieben in Elektrizitätswirtschaft 80 (1981) S. 324-328. Einadrige Hochspannungskabel mit im Kabel integrierten Kühlkanälen sind dargestellt in Elektrizitätswirtschaft 80 (1981) S. 1387-1390. Zum wirtschaftlichen Betrieb einer solchen Kabelanlage sind besonders die Parameter Einspeisedruck des Kühlmittels, Länge der Trasse, Zahl möglicher Kühlunterabschnitte, Anzahl der Kühlrohre und Hohlkanaldurchmesser optimal aufeinander einzustellen.

Mit zunehmender Trassenlänge, bzw mit zunehmender Übertragungsleistung erreichen bisher vorgeschlagene Anlagen ihre Systemgrenzen. Verbesserungen an bestehenden Anlagen könnten beispielsweise durch Erhöhen des Einspeisedrucks des Kühlmittels erreicht werden. Solche Maßnahmen haben jedoch ihre technischen Grenzen in der Druckbelastbarkeit des Materials oder auch wirtschaftliche Schranken.

Es ist Aufgabe der Erfindung, Maßnahmen vorzuschlagen, mit denen die Leistungsreserven von Kabelanlagen mit Bündelkühlung und kaskadischem Kühlprinzip erhöht werden können.

Die Lösung der Aufgabe wird verfahrensmäßig im Kennzeichen des Hauptanspruchs und als Anordnung im Kennzeichen des 7. Anspruchs wiedergegeben. Vorteilhafte Weiterbildungen finden sich in den zugeordneten Unteransprüchen.

Als kritische Parameter stellen sich die Fließgeschwindigkeit oder der verbleibende Druck im letzten Abschnitt der Kaskade dar. Diese Parameter sind stark abhängig vom Strömungswiderstand, welcher selbst äußerst stark vom Rohrdurchmesser abhängt, da dieser Zusammenhang über die 5. Potenz des Durchmessers bestimmt wird.

Aus wirtschaftlicher Sicht können nach der Erfindung zwei Gruppen von Verbesserungen der Strömungsverhältnisse gebildet werden. Eine erste Gruppe besteht darin, Maßnahmen zu ergreifen, die bei der Planung und Errichtung von Neuanlage in Betracht kommen. Eine zweite Gruppe von Verbesserungen kann an bestehenden Anlagen vorgenommen werden. Zu diesen zählt das Einbringen von Druckminderungsventile in Unterabschnitte. Technisch ist jedoch auch eine Anwendung der Erfindung aus der ersten Gruppe der Vorschläge an vorhandenen Anlagen nicht ausgeschlossen.

Das wesentliche Merkmal des vorgeschlagenen Verfahrens besteht darin, die hydraulischen Drücke am Ende jeweils des ersten bis vorletzten Unterabschnitts auf den Druck des letzten Unterabschnitts einzuregeln. Mögliche Ausgestaltungen dieses Verfahrens sind folgende:

Ein Verfahren, bei dem die hydraulischen Drücke am Ende jeden druckgeregelten Unterabschnitts mittels Druckminderungsventile eingeregelt werden. Ein anderes Verfahren, bei dem die hydraulischen Drücke am Ende jeden druckgeregelten Unterabschnitts durch gestufte Abfolge zunehmender Durchmesser der Kühlmittelhinleitungsrohre eingestellt werden. Ein wieder anderes Verfahren, bei dem die hydraulischen Drücke am Ende jeden druckgeregelten Unterabschnitts durch gestufte Abfolge abnehmender Längen der Unterabschnitte eingestellt werden. Oder eine Kombination folgender Maßnahmen: Verwenden von Druckminderungsventile am Ende jeden druckgeregelten Unterabschnitts, Stufung der Abfolge zunehmender Durchmesser der Kühlmittelhinleitungsrohre in jedem druckgeregelten Unterabschnitt oder Stufung der Abfolge abnehmender Längen der Unterabschnitte.

Zusätzlich zu einem der aufgezählten Verfahren, kann die Kabelanlage so betrieben werden, daß das Kühlmittel zwangsgekühlt wird.

Neben den vorgeschlagenen Verfahren wird die Erfindung auch in Sachansprüchen konkretisiert. Eine solche Kabelanlage zur Übertragung großer Leistungen über einadrige Hochspannungskabel mit im Kabel integrierten Kühlkanälen und mit mindestens einem Paar zusätzlicher, außerhalb des Kabels liegender Kühlmittelrohre zur Kühlmittelhin- und -rückleitung und mit kaskadenartiger Unterteilung der Trasse in Unterabschnitte hat folgende Merkmale: sie umfaßt Vorrichtungen, mit denen die hydraulischen Drücke am Ende jeweils des ersten bis vorletzten Unterabschnitts auf den Druck des letzten Unterabschnitts einregelbar sind.

Alternative Ausgestaltungen dieser Kabelanlage liegen in folgendem:
Die angesprochenen Vorrichtungen bestehen aus Druckminderungsventilen am Ende jeweils des ersten bis vorletzten Unterabschnitts. Die Durchmesser der Kühlmittelhinleitungsrohre je Unterabschnitt werden in zunehmender Abfolge gestuft. Die Längen der Unterabschnitte werden in abnehmend Abfolge gestuft.

Weiterhin kann die Kabelanlage mit einer Kombination der vorgenannten Vorrichtungen ausgestattet sein, nämlich
- Druckminderungsventilen am Ende jeweils des ersten bis vorletzten Unterabschnitts,
- zunehmend gestufte Abfolge der Rohrdurchmesser der Kühlmittelrohre je Unterabschnitt und/ oder
- abnehmend gestufte Abfolge der Längen der Unterabschnitte.

Zusätzlich kann in den Kühlkreislauf der Kabelanlage nach einem der aufgeführten Ausführungsformen mindestens eine Kältemaschine geschaltet sein.

Die Erfindung wird in den Figuren dargestellt. Es zeigen im einzelnen
Fig. 1 das Kühlsystem für ein Drehstromkabel,
Fig. 2 einen Querschnitt durch das Kabelsystem,
Fig. 3 das hydraulischem Ersatzschaltbild,
Fig. 4 den Einfluß der Unterabschnittslänge auf die Belastbarkeit,
Fig. 5 den Einfluß des Bündelrohrdurchmessers auf die Belastbarkeit und
Fig. 6 den Einfluß der Kühlwassertemperatur auf die Belastbarkeit.

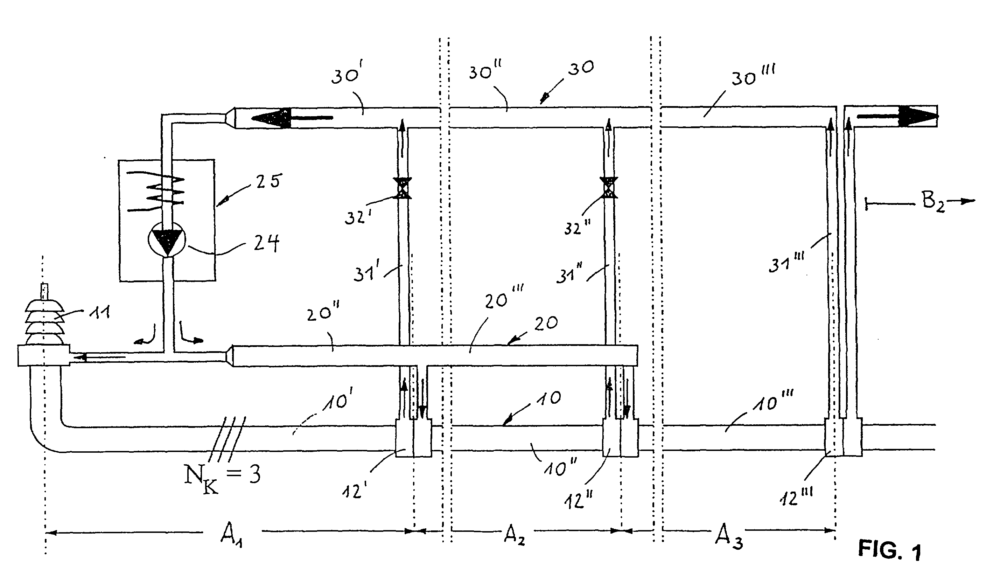

In Fig. 1 sind drei Unterabschnitte A₁,A₂,A₃ eines Kühlsystems für ein Drehstromkabel 10 mit Bündelkühlung dargestellt, dem sich ein weiteres Kühlsystem B₂ (nur schematisch angedeutet) anschließen kann. Beispielsweise sind drei hydraulisch parallel geschaltete Bündelrohre 4 je Kabelader verwendet. Das Kühlsystem wird von einer Umwälzpumpe 24 einer Kühlstation 25 angetrieben, welche einen bestimmten Kühlmitteldurchsatz I und einen bestimmten Druck p_{ges} erzeugt. Das Kühlmittel gelangt über eine Einspeisemuffe 11 in das Kabel 10, bzw. über ein Hinführungsrohr 20 mit den Abschnitten 20",20"' zu den weiteren Unterabschnitten A₂,A₃ mit entsprechenden Längen *l*₂,*l*₃ in Richtung Trassenende. Einspeisung und Ausspeisung des Kühlmittels geschieht an Zuführungen 21",21"' zu Trennmuffen 12',12",12"' am Ende jeden Abschnitts. Das erwärmte Kühlmittel läuft über Auslaufrohre 30',30",30"' in das Rückführungsrohr 30. In den Auslaufrohren des vorletzen und vorvorletzten Abschnitts A₁,A₂ sind Druckminderungsventile 32',32" eingebaut. Im letzten Abschnitt A₃ befindet sich kein Druckminderungsventil.

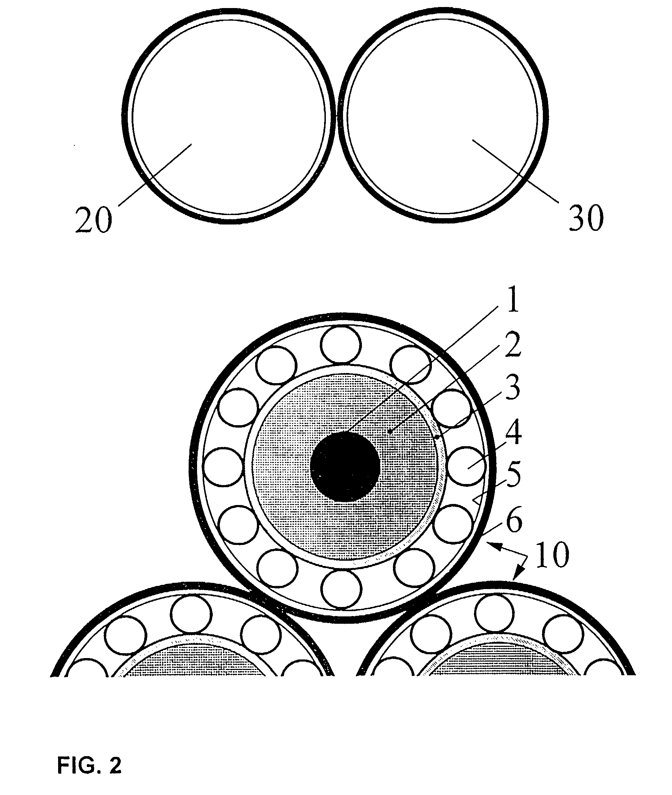

Durch die Erfindung ist es möglich, die Dauerbelastbarkeit von VPE-Kabeln, die für 110 kV ausgelegt sind, auf 350 MVA zu steigern. In Fig. 2 ist schematisch eine solche Konstruktion skizziert. Die Kabel 10 liegen in einer engen Dreieckanordnung im Kabelgraben, die beiden Rohre 20,30 des Kühlsystems laufen über der Kabelstrecke.

Zum Aufbau der Kabel 10 wird erwähnt: oberhalb jeder Kabelader (mit Leiter 1, Isolierung 2, Kupferschirm 3) sind Edelstahl-Kühlrohre 4 (beispielsweise gemäß Figur zwölf) verseilt. Die Kabel 10 sind außen mit Bandage 5 und Korrosionsschutz 6 versehen. Die Wandstärke der Kühlrohre 4 beträgt 1 mm, und ihr Außendurchmesser variiert im Folgenden zwischen 8 und 12 mm.

Der Außendurchmesser dieser Konstruktion liegt damit um etwa 17 bis 25 mm höher als bei ungekühlten Konstruktionen (Außendurchmesser 192 mm): mit 119 bis 127 mm bleibt er durchaus in einem wirtschaftlich akzeptablen Bereich.

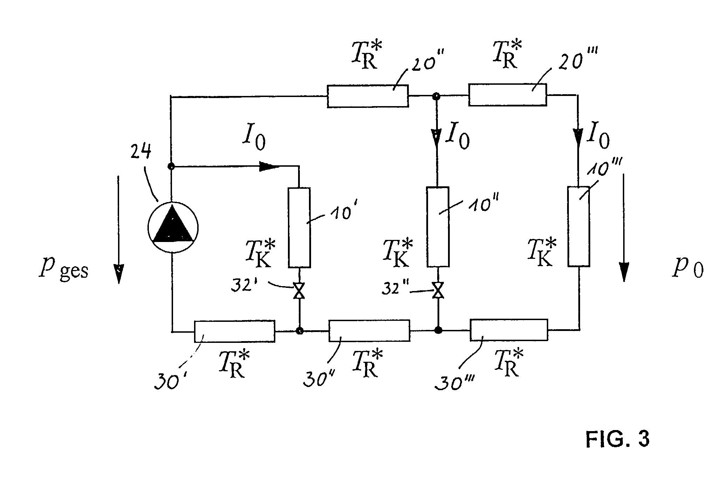

Die Strömungsverhältnisse sind in Fig. 3 in einem hydraulischem Ersatzschaltbild dargestellt. Mit gleichen Bezugszeichen wie in Fig. 1 sind gleiche Teile der Kabelanlage bezeichnet. Vom Druck P_{ges} der Umwälzpumpe 24 steht im letzen Abschnitt nur noch der Druck p₀ an. Für den Fall, daß die Kabel mit Bündelrohren strömungstechnisch identisch aufgebaut sind, wird durch die Einhaltung eines bestimmten Drucks in jedem Unterabschnitt, der dem Druck p₀ im letzten Abschnitt entspricht, erreicht, daß der Kühlmitteldurchsatz I₀ durch jeden Unterabschnitt gleich ist.

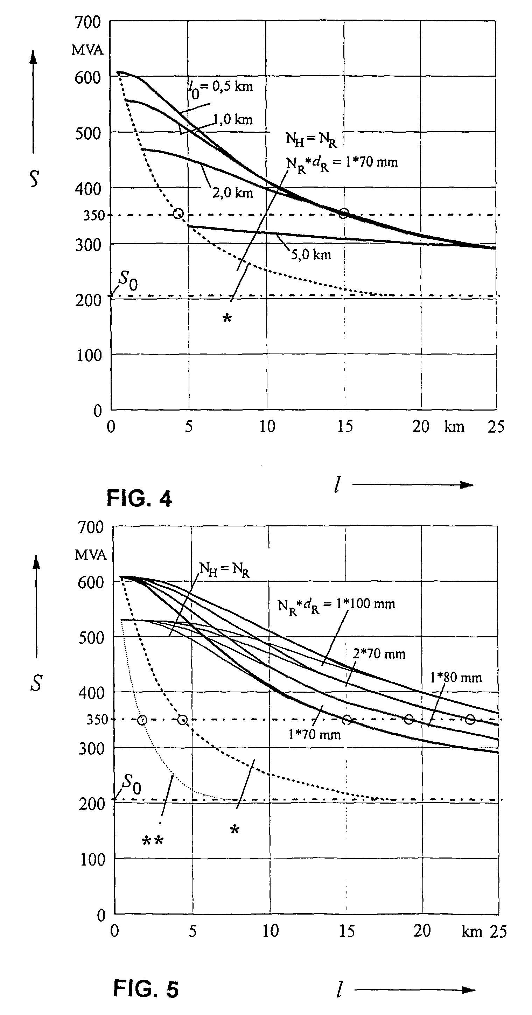

In den weiteren Figuren 4 bis 6 sind Simulationen dargestellt, die für eine Kabelanlage mit folgender Auslegung berechnet wurden: 110-kV-VPE-Kabel vom Typ N2XS2Y 3*1*1600/100, Druck p_{ges} = 50 bar. Weitere Parameter sind: Kühlmitteleintritsstemperatur Θ, Durchmesser des Hin-, bzw. Rückführungsrohrs *d*_{R}, Zahl der Rückführungsrohre N_{K}, Länge / der Trasse und Längen der Unterabschnitte *l*₁,*l*₂,*l*₃.

Durch den Einsatz der Druckminderungsventile an den Einspeisestellen ergeben sich besonders günstige wirtschaftliche Verhältnisse für das hydraulische Netzwerk.

Schon einfache Betrachtungen an einer dreigeteilten Trasse können die Vorteile der Erfindung aufzeigen.

Je nach den thermischen Gegebenheiten ist der Betrieb einer vorgestellten Kabelanlage mit mindestens einer oder ohne zusätzlicher Kältemaschine möglich. Wenn geringe Einspeisetemperaturen Θ (beispielsweise 30 °C) erreichbar sind, kann die Erfindung auch ohne zusätzliche Kältemaschine umgesetzt werden.

Es ist erkennbar, daß im Bereich nicht allzu großer Kühlabschnittslängen *l* bis zu etwa *l* = 10 km spürbare Belastbarkeitssteigerungen um etwa 10 bis 15 % erzielt werden können.

Einen Eindruck von der Leistungsfähigkeit der hydraulischen Kaskadenschaltung liefert Fig. 4. Zugrunde gelegt wird jeweils ein Rohr für das Hinführungs- bzw. Rückführungssystem. Als Innendurchmesser für diese Rohre wird einerseits mit *d*_{R} = 70 mm ein Rohr gewählt, daß hinreichend biegbar für die Verwendung transportabler Kabeltrommeln ist, und alternativ hierzu mit *d*_{R} = 100 mm ein spürbar größeres Rohr.

Deutlich wird, daß die Belastbarkeiten bei vorgegebener Länge bzw. die Übertragungslängen bei vorgegebener Übertragungsleistung durch die hydraulische Kaskadenschaltung spürbar angehoben werden. So kann die angestrebte Übertragungsleistung von 350 MVA gegenüber rd. 1,8 km bei thermischer Kaskadenschaltung nun mit einer Kühlstation über einer Kühlabschnittslänge von *l* = 15 km geführt werden, wenn ein Rohrdurchmesser für das Hinführungs- bzw. Rückführungssystem von *d*_{H} = *d*_{R} = 70 mm gewählt wird. Vergrößert man diesen Rohrdurchmesser auf *d*_{H} = *d*_{R} = 100 mm, so vergrößert sich die Kühlabschnittslänge auf rd. 26 km.

Setzt man - wie in Fig. 1 mit B₂ angedeutet - symmetrisch einen gleichartigen zweiten Kühlabschnitt an den ersten an, so betragen die entsprechenden Kühlstationenabstände 30 km bzw. mehr als 50 km.

Fig. 4 zeigt den Einfluß der Kühl-Unterabschnittslänge *l*₀ auf die Dauerbelastbarkeit S als Funktion der Kühlabschnittslänge *l* bei sonstigen Parametern mit *d*_{H} = *d*_{R} = 70 mm. Gestrichelt (*) ist eine Anlage mit einem Rückführungs- jedoch ohne Hinführungsrohr dargestellt. Die maximal erreichbare Leistung einer solchen Anlage liegt bei 200 MVA.
Anzahl der Bündelrohre N_{K} = 12
Anzahl der Hin- bzw. Rückführungsrohre N_{H} = N_{R} = 1
Durchmesser der Hin- bzw. Rückführungsrohre *d*_{H} = *d*_{R} = 70 mm
p_{ges} = 50 bar; Kühlwasser-Eintrittstemperatur Θ = 30 °C.

Die mit kleinen Kreisen (o) gekennzeichneten Schnittpunkte mit den Funktionsverläufen bedeuten, daß bei größeren Kühlabschnittslängen durchaus auch größere Kühl-Unterabschnittslängen gewählt werden können: so darf im gewählten Beispiel (S= 350 MVA) bei der maximalen Kühlabschnittslänge von 15 km durchaus eine Kühl-Unterabschnittslänge von *l*₀ = 2 bis 5 km gewählt werden, ohne daß nachteilige Effekte einträten.

Fig. 5 gibt einen Vergleich der Übertragungsleistungen bzw. der Kühlabschnittslängen für die beiden unterschiedlichen Außendurchmesser der Bündelrohre von *d*_{R} = 12 mm bzw. *d*_{R} = 8 mm (dünne Kennlinien). Ergänzend werden als Parameter für das Hin- bzw. Rückführungsrohrsystem gewählt:
- N_{H}**d*_{H} = N_{R}**d*_{R} = 1*80 mm bzw.
- N_{H}**d*_{H} = N_{R}**d*_{R} = 2*70 mm (d.h. jeweils zwei Rohre je Hin- bzw. Rückführungsrohrsystem).

In Fig. 5 ist der Einfluß des Bündelrohrdurchmessers *d*_{K} auf die Dauerbelastbarkeit S als Funktion der Kühlabschnittslänge *l* deutlich erkennbar. Wiederum ist gestrichelt (*,**) eine Anlage mit einem Rückführungsrohr, jedoch ohne Hinführungsrohr zum Vergleich eingezeichnet. Es bedeuten die dicken Kennlinien: Durchmesser der Bündelrohre *d*_{K} = 12 mm, und sie dünnen Kennlinien: Durchmesser der Bündelrohre *d*_{K} = 8 mm. Die weiteren Größen sind:
Anzahl der Bündelrohre N_{K} = 12,
Anzahl N_{H} = N_{R} und Durchmesser *d*_{H} = *d*_{R} der Hin- bzw. Rückführungsrohre,
Kühl-Unterabschnittslänge *l*₀ = 500 m,
p_{ges} = 50 bar; Kühlwasser-Eintrittstemperatur Θ = 30°C.

Der Vergleich weist aus, daß der größere Durchmesser der Bündelrohre in einem Kühlabschnittsbereich bis zu etwa 5 km zu spürbaren Belastbarkeitssteigerungen führt, bei kleineren Übertragungsleistungen bzw. bei größeren Kühlabschnittslängen ab etwa 10 bis 15 km jedoch keinen Vorteil mehr bringt.

So reicht für das gewählte Beispiel einer Übertragungsleistung S von 350 MVA ein Bündelrohrdurchmesser von *d*_{K} = 8 mm aus, um bei den unterschiedlichen Hin- bzw. RückführungsrohrDurchmessern und -Anzahlen zu folgenden Kühlabschnittslängen zu führen
- 15 km für N_{R}**d*_{R} = 1*70 mm,
- 20 km für N_{R}**d*_{R} = 1*80 mm,
- rd. 24 km für N_{R}**d*_{R} = 2*70 mm und
- 26 km für N_{R}**d*_{R} = 1*100 mm.

Demnach können alternativ zu dem großen Rohr mit einem Durchmesser von *d*_{R} = 100 mm auch zwei Rohre je Hin- bzw. Rückführungssystem mit einem Durchmesser von *d*_{R} = 70 mm gewählt werden, d. h. eine Variante mit auftrommelbaren Rohren bei vergleichbarem Leistungsvermögen.

Bisher wurde den Berechnungen eine Kühlwasser-Eintrittstemperatur von Θ = 30 °C vorausgesetzt, so daß keine Kältemaschine eingesetzt werden muß. Wird der Frage nachgegangen, welche Leistungsreserven eine solche Kabelanlage z.B. im Überlastfall bietet, so ist die Kühlwasser-Eintrittstemperatur ein wesentlicher Parameter, wenn eine Kältemaschine für solche Laststeigerungen bereit gehalten wird.

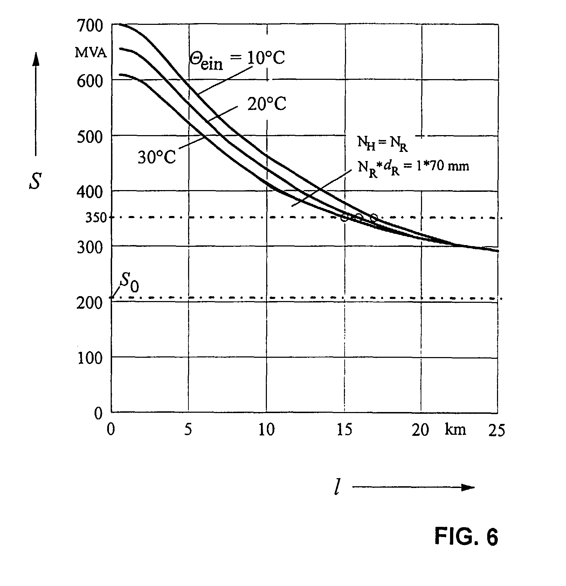

Fig. 6 zeigt den Einfluß der Kühlwasser-Eintrittstemperatur Θ auf die Dauerbelastbarkeiten S, wenn die Kühlwasser-Eintrittstemperatur von Θ = 30 °C auf 10 °C gesenkt wird; dabei wird für das Hin- bzw. Rückführungsrohrsystem jeweils ein Rohr mit einem Innendurchmesser von *d*_{R} = 70 mm zugrundegelegt. Der Fig. 6 sind folgende Parameter zugrunde gelegt:
Anzahl der Bündelrohre N_{K} = 12,
Anzahl der Hin- bzw. Rückführungsrohre N_{H} = N_{R} = 1,
Durchmesser der Hin- bzw. Rückführungsrohre *d*_{H} = *d*_{R} = 70 mm,
Kühl-Unterabschnittslänge *l*₀ = 500 m; p_{ges} = 50 bar.

Deutlich wird, daß im Bereich nicht allzu großer Kühlabschnittslängen bis zu etwa 10 km spürbare Belastbarkeitssteigerungen um etwa 10 bis 15 % erzielt werden können.

## Patentansprüche

1. Verfahren zum Betreiben einer Kabelanlage zur Übertragung großer Leistungen über einadrige Hochspannungskabel (10) mit im Kabel integrierten Kühlkanälen (4)
und mit
mindestens einem Paar zusätzlicher, außerhalb des Kabels (10) liegender Kühlmittelrohre (20,30) zur Kühlmittelhin- und -rückleitung,
und mit kaskadenartiger Unterteilung der Trasse in Unterabschnitte (A₁,A₂,A₃), **dadurch gekennzeichnet**,
daß die hydraulischen Drücke am Ende jeweils des ersten bis vorletzten Unterabschnitts (A₁,A₂) auf den Druck des letzten Unterabschnitts (A₃) eingeregelt werden.

2. Verfahren zum Betreiben einer Kabelanlage nach Anspruch 1, dadurch gekennzeichnet, daß die hydraulischen Drücke am Ende jeden druckgeregelten Unterabschnitts (A₁,A₂) mittels Druckminderungsventile (32' ,32") eingeregelt werden.

3. Verfahren zum Betreiben einer Kabelanlage nach Anspruch 1, dadurch gekennzeichnet, daß die hydraulischen Drücke am Ende jeden druckgeregelten Unterabschnitts (A₁,A₂) durch gestufte Abfolge zunehmender Durchmesser (*d*) der Kühlmittelhinleitungsrohre (20',20") eingestellt werden.

4. Verfahren zum Betreiben einer Kabelanlage nach Anspruch 1, dadurch gekennzeichnet, daß die hydraulischen Drücke am Ende jeden druckgeregelten Unterabschnitts (A₁,A₂) durch gestufte Abfolge abnehmender Längen (*l*₁,*l*₂) der Unterabschnitte (A₁,A₂) eingestellt werden.

5. Verfahren zum Betreiben einer Kabelanlage nach Anspruch 1, dadurch gekennzeichnet, daß die hydraulischen Drücke am Ende jeden druckgeregelten Unterabschnitts (A₁,A₂) durch eine Kombination folgender Maßnahmen eingestellt werden:
- Verwenden von Druckminderungsventile (32',32") am Ende jeden druckgeregelten Unterabschnitts (A₁,A₂),
- Stufung der Abfolge zunehmender Durchmesser der Kühlmittelhinleitungsrohre (20) in jedem druckgeregelten Unterabschnitt (A₁,A₂) oder
- Stufung der Abfolge abnehmender Längen (*l*₁,*l*₂) der Unterabschnitte (A₁,A₂).

6. Verfahren zum Betreiben einer Kabelanlage nach einem der vorhergehenden Ansprüche, dadurch gekennzeichnet, daß zusätzlich das Kühlmittel zwangsgekühlt wird.

7. Kabelanlage zur Übertragung großer Leistungen über einadrige Hochspannungskabel mit im Kabel integrierten Kühlkanälen und mit mindestens einem Paar zusätzlicher, außerhalb des Kabels (10) liegender Kühlmittelrohre (20,30) zur Kühlmittelhin- und -rückleitung, und mit kaskadenartiger Unterteilung der Trasse in Unterabschnitte (A₁,A₂,A₃), **gekennzeichnet** durch Vorrichtungen (32) mit denen die hydraulischen Drücke am Ende jeweils des ersten bis vorletzten Unterabschnitts (A₁,A₂) auf den Druck des letzten Unterabschnitts (A₃) einregelbar sind.

8. Kabelanlage nach Anspruch 7, dadurch gekennzeichnet, daß die Vorrichtungen Druckminderungsventile (32',32") am Ende jeweils des ersten bis vorletzten druckgeregelten Unterabschnitts (A₁,A₂) sind.

9. Kabelanlage nach Anspruch 7, dadurch gekennzeichnet, daß die Durchmesser (*d*) der Kühlmittelhinleitungsrohre (20) je Unterabschnitt eine zunehmend gestufte Abfolge haben.

10. Kabelanlage nach Anspruch 7, dadurch gekennzeichnet, daß die Längen der Unterabschnitte (A₁,A₂,A₃) eine abnehmend gestufte Abfolge haben.

11. Kabelanlage nach Anspruch 7, dadurch gekennzeichnet, daß die Vorrichtungen eine Kombination sind aus:
- Druckminderungsventilen (32',32") am Ende jeweils des ersten bis vorletzten Unterabschnitts (A₁,A₂),
- zunehmend gestufte Abfolge der Rohrdurchmesser (*d*) der Kühlmittelrohre (20,30) je Unterabschnitt und/oder
- abnehmend gestufte Abfolge der Längen (*l*) der Unterabschnitte (A₁,A₂,A₃).

12. Kabelanlage nach einem der Ansprüche 7 bis 11, dadurch gekennzeichnet, daß zusätzlich mindestens eine Kältemaschine (25) in den Kühlkreislauf geschaltet ist.

## Claims

1. A method of operating a cable system for high-power transmission via single-wire high-voltage cables (10) comprising cooling ducts (4) incorporated into the cable, comprising at least one pair of additional coolant conduits (20, 30) arranged outside the cable (10) and provided for the supply and return of coolant, and comprising cascade-type division of the route into sub-portions (A₁, A₂, A₃), characterised in that the hydraulic pressures at the end of the first and penultimate sub-portions (A₁, A₂) are adjusted to the pressure of the last sub-portion (A₃).

2. A method of operating a cable system according to claim 1, characterised in that the hydraulic pressures at the end of each pressure-regulated sub-portion (A₁, A₂) are adjusted by means of pressure-reducing valves (32', 32").

3. A method of operating a cable system according to claim 1, characterised in that the hydraulic pressures at the end of each pressure-regulated sub-portion (A₁, A₂) are adjusted by means of a stepped succession of increasing diameters (d) of the coolant supply conduits (20", 20"').

4. A method of operating a cable system according to claim 1, characterised in that the hydraulic pressures at the end of each pressure-regulated sub-portion (A₁, A₂) are adjusted by means of a stepped succession of decreasing lengths (l₁, l₂) of the sub-portions (A₁, A₂).

5. A method of operating a cable system according to claim 1, characterised in that the hydraulic pressures at the end of each pressure-regulated sub-portion (A₁, A₂) are adjusted by means of a combination of the following measures:
- use of pressure-reducing valves (32', 32") at the end of each pressure-regulated sub-portion (A₁, A₂),
- stepped succession of increasing diameters of the coolant supply conduits (20) in each pressure-regulated sub-portion (A₁, A₂), or
- stepped succession of decreasing lengths (l₁, l₂) of the sub-portions (A₁, A₂).

6. A method of operating a cable system according to any one of the preceding claims, characterised in that the coolant is additionally force-cooled.

7. A cable system for high-power transmission via single-wire high-voltage cables comprising cooling ducts incorporated into the cable, comprising at least one pair of additional coolant conduits (20, 30) arranged outside the cable (10) and provided for the supply and return of coolant, and comprising cascade-type division of the route into sub-portions (A₁, A₂, A₃), characterised by devices (32) by means of which the hydraulic pressures at the end of the first and penultimate sub-portions (A₁, A₂) are adjustable to the pressure of the last sub-portion (A₃).

8. A cable system according to claim 7, characterised in that the devices are pressure-reducing valves (32', 32") at the end of the first and penultimate pressure-regulated sub-portions (A₁, A₂).

9. A cable system according to claim 7, characterised in that the diameters (d) of the coolant supply conduits (20) increase in stepped succession per sub-portion.

10. A cable system according to claim 7, characterised in that the lengths of the sub-portions (A₁, A₂, A₃) decrease in stepped succession.

11. A cable system according to claim 7, characterised in that the devices are a combination of:
- pressure-reducing valves (32', 32") at the end of the first and penultimate sub-portions (A₁, A₂),
- stepped succession of increasing diameters (d) of the coolant supply conduits (20) per sub-portion, and/or
- stepped succession of decreasing lengths (I) of the sub-portions (A₁, A₂, A₃).

12. A cable system according to any one of claims 7 to 11, characterised in that at least one refrigerating machine (25) is additionally arranged in the cooling circuit.

## Revendications

1. Procédé pour exploiter une installation de câbles pour le transport de grandes puissances au moyen d'un câble à haute tension à âme unique (10) comprenant des canaux de refroidissement (4) intégrés dans le câble, et comprenant au moins une paire de tubes d'agent de refroidissement (20, 30) agencés à l'extérieur du câble (10), pour la conduite d'aller et de retour de l'agent de refroidissement,
et avec subdivision en cascade de la ligne en sous-sections (A₁, A₂, A₃), caractérisé
en ce que les pressions hydrauliques à l'extrémité de chacune des première à avant-dernière sous-sections (A₁, A₂) sont réglées sur la pression de la dernière sous-section (A₃).

2. Procédé pour exploiter une installation de câbles selon la revendication 1, caractérisé en ce que les pressions hydrauliques à l'extrémité de chaque sous-section (A₁, A₂) réglée en pression sont réglées au moyen de détendeurs (32', 32").

3. Procédé pour exploiter une installation de câbles selon la revendication 1, caractérisé en ce que les pressions hydrauliques à l'extrémité de chaque sous-section (A₁, A₂) réglée en pression sont réglées par une succession échelonnée de diamètres (*d*) croissants des tubes d'aller de l'agent de refroidissement (20", 20"').

4. Procédé pour exploiter une installation de câbles selon la revendication 1, caractérisé en ce que les pressions hydrauliques à l'extrémité de chaque sous-section (A₁, A₂) réglée en pression sont réglées par une succession échelonnée de longueurs (*l*₁, *l*₂) décroissantes des sous-sections (A₁, A₂).

5. Procédé d'exploitation d'une installation de câbles selon la revendication 1, caractérisé en ce que les pressions hydrauliques à l'extrémité de chaque sous-section (A₁, A₂) réglée en pression sont réglées par une combinaison des dispositions suivantes :
- utilisation de détendeurs (32', 32") à l'extrémité de chaque sous-section réglée en pression (A₁, A₂),
- succession échelonnée de diamètres croissants pour les tubes (20) de conduite d'aller de l'agent de refroidissement dans chaque sous-section (A₁,A₂) réglée en pression, ou succession échelonnée de longueurs décroissantes (*l*₁, *l*₂) pour les sous-sections (A₁, A₂).

6. Procédé d'exploitation d'une installation de câbles selon une des revendications précédentes, caractérisé en ce qu'en supplément, l'agent de refroidissement est soumis à un refroidissement forcé.

7. Installation de câbles pour le transport de grandes puissances au moyen d'un câble à haute tension à âme unique comprenant des canaux de refroidissement intégrés dans le câble, et comprenant au moins une paire de tubes d'agent de refroidissement (20,30) agencés à l'extérieur du câble (10), pour la conduite d'aller et de retour de l'agent de refroidissement, et avec subdivision en cascade de la ligne en sous-sections (A₁, A₂, A₃), caractérisée par des dispositifs (32) par lequels les pressions hydrauliques à l'extrémité de chacune des première à avant-dernière sous-sections (A₁, A₂) sont réglées sur la pression de la dernière sous-section (A₃).

8. Installation de câbles selon la revendication 7, caractérisée en ce que les dispositifs sont des détendeurs (32', 32") disposés à l'extrémité de chacune des première à avant-dernière sous-sections (A₁, A₂) réglées en pression.

9. Installation de câbles selon la revendication 7, caractérisée en ce que les diamètres (d) des tubes (20) d'aller de l'agent de refroidissement sont agencés selon une succession échelonnée dans un ordre croissant par sous-section.

10. Installation de câbles selon la revendication 7, caractérisée en ce que les longueurs des sous-sections (A₁, A₂, A₃) sont ordonnées selon une succession échelonnée dans un ordre décroissant.

11. Installation de câbles selon la revendication 7, caractérisée en ce que les dispositifs sont une combinaison de :
- détendeurs (32', 32") à l'extrémité des première à avant-dernière sous-sections (A₁, A₂),
- succession échelonnée dans un ordre croissant des diamètres (d) des tubes d'agent de refroidissement (20, 30) par sous-section et/ou
- succession échelonnée dans un ordre décroissant des longueurs (1) des sous-sections (A₁, A₂, A₃).

12. Installation de câbles selon une des revendications 7 à 11, caractérisée en ce qu'en supplément, au moins une machine frigorifique (25) est intercalée dans le circuit de refroidissement.
